# EUROPÄISCHE PATENTSCHRIFT

(11) **EP 0 414 154 B1**
(45) Veröffentlichungstag und Bekanntmachung des Hinweises auf die Patenterteilung: **15.05.1996**
(21) Anmeldenummer: 90115827.9
(22) Anmeldetag: 17.08.1990
(51) Int. Cl.: B29C 45/17

(54) **Spritzgussverfahren und Einrichtung zur Herstellung hohler Kunststoffgegenstände**
Injection moulding method and apparatus for making hollow plastic objects
Procédé et dispositif de moulage par injection pour fabriquer des objets creux en matière plastique

(30) Priorität: 17.08.1989 DE 3927122
(43) Veröffentlichungstag der Anmeldung: 27.02.1991
(73) Patentinhaber: THYSSEN POLYMER GMBH, D-81601 München (DE)
(72) Erfinder: Neueder Ludwig, W-8443 Furth/Bogen (DE)

(56) Entgegenhaltungen:
- EP-A- 0 321 117
- DE-A- 2 655 255
- FR-A- 2 068 845
- FR-A- 2 125 300
- GB-A- 2 139 548

## Beschreibung

Die Erfindung bezieht sich auf ein Spritzgießverfahren zur Herstellung hohler Kunststoffgegenstände sowie auf eine Einrichtung zur Durchführung des Verfahrens, bei dem ein Fluid unter Druck unmittelbar nach dem Einspritzen der plastischen Kunststoffmasse, ohne mit dieser vorher in Berührung zu kommen, in den Formhohlraum eingepreßt wird, so daß sich die Kunststoffmasse über die Oberfläche des Formhohlraumes ausbreitet.

Solche Spritzgießverfahren dienen zur Herstellung auch großvolumiger Hohlkörper unterschiedlicher Größe und Form in einem Arbeitsgang, ohne Anfertigung eines sogen. Vorformlings.

Ein solches Verfahren ist z.B. aus der DE-OS 25 01 314 bekannt, wobei die plastische Kunststoffmasse zuerst in die Form eingespritzt wird und anschließend, ggf. auch damit überlappend, ein Gas durch den Angußkanal des Spritzgießwerkzeuges mit solchem Druck in die Kunststoffmasse gepreßt wird, daß diese sich gleichmäßig über die Oberfläche der Form ausbreitet, anschließend wird plastische Masse nachgedrückt, um die Gaseintrittsöffnung wieder zu verschließen. Nach Abkühlung des Spritzlings wird dieser angebohrt, damit das Gas wieder entweichen kann. Irgendwelche Hinweise über die Durchführung des Verfahrens und die Ausbildung der Vorrichtung sind dieser Druckschrift nicht entnehmbar.

Auch die US-PS 4 101 617 beschreibt ein solches Verfahren, dabei wird das Gas durch die Injektionsdüse für die plastische Kunststoffmasse eingepreßt, wobei der Gasstrahl auf die gegenüberliegende Wand des noch plastischen Spritzlings gerichtet ist.

Die DE-OS 21 06 546 (= FR-A-21 25 300) geht von der Aufgabe aus, Mittel und Wege zu finden, wie ein Gegenstand als Spritzgußkörper besonders großen Volumens auf einfache Weise hergestellt werden kann, ohne daß es eines komplizierten Formenaufbaues und der Durchführung eines ebenso komplizierten Spritzvorganges bedarf. Dabei wird innerhalb der hierfür vorgesehenen Einspritzzeit in der darauffolgenden Nachdruckzeit dem niedrigviskosen Zentrum des Spritzgußkörpers Druckgas beispielsweise Luft zugeführt, oder aber dieser Hohlraum mit aufgeschäumtem Kunststoff ausgefüllt. Dazu wird eine zweite Düse zur Zuführung des Nachdruckgases vorgesehen, deren Mündung in den Bereich des niedrigviskosen Zentrums des Spritzgußkörpers ragt.

Die DE-OS 24 61 580 bezieht sich auf ein Verfahren zur Herstellung geformter Gegenstände aus Kunststoff, bei dem schäumbare synthetische Harze Verwendung finden. Um die erforderliche Zeit für die Abkühlung zu verkürzen, was besonders wichtig für die dicken Abschnitte des Formkörpers ist, wird ebenfalls ein Fluid unter Druck in den Formhohlraum, d.h. das Formnest eingepreßt. Dies dient besonders dazu, in diesen hohlen Abschnitt des Spritzlings schäumbare Harze einfüllen zu können. Dadurch ergibt sich außen eine glatte Schicht und innen ein geschäumter Kern. Auch hierzu wird innerhalb der Spritzdüse eine zweite Injektionsdüse für das Fluid angeordnet.

Ähnlich ist auch das Verfahren und die Vorrichtung gem. der DD 123 067 aufgebaut, sowie die gem. der GB-PS 21 39 548, 21 58 002, der JP-OS 50 71 756 und der FR-OS 74 43 004.

Diese Verfahren sind mit verschiedenen Nachteilen behaftet. So ist eine gezielte Gaseinführung nicht möglich. Die Richtung des Gasstrahls ist stets auf die der Einspritzdüse gegenüberliegende Wand des noch plastischen Spritzlings gerichtet, der als Prallfläche dient, und kann dort Schädigungen der Masse und Wanddicke verursachen. Ein weiterer Nachteil ist darin zu sehen, daß die Einspritzdüsen, wegen der zusätzlichen Gaseinpressung, regelmäßig aufwendige Spezialkonstruktionen sein müssen, da die normalen Einspritzdüsen für ein solches Verfahren nicht geeignet sind. Die Einspritzdüsenfunktion wird durch verfahrensbedingte, unterschiedliche Parameter (z.B. Temperaturen), zusätzlich in ihrer Funktion beeinflußt. Diese Einflüsse können außerdem einen negativen Einfluß auf die Qualität des Spritzlings haben. Eine, wie auch immer geartete Nutzung des Angußbereiches des Spritzlings ist dabei nicht möglich.

Hier will die Erfindung Abhilfe schaffen. Die Erfindung, wie sie in den Ansprüchen gekennzeichnet ist, löst die Aufgabe, ein Verfahren zur Herstellung hohler Kunststoffgegenstände und eine Einrichtung zu deren Durchführung zu schaffen, bei dem die Nachteile der bekannten Verfahren dieser Art vermieden sind, handelsübliche Einspritzdüsen für die plastische Kunststoffmasse und sonstige Teile der Einspritzvorrichtung, wie z.B. Rückstromsperren, Verschlußdüsen usw. verwendet werden können, ferner Schäden durch das Aufprallen des unter Druck stehenden Fluidstromes auf die Wandungen des Spritzlinges zu vermeiden und das Verfahren wirtschaftlicher zu gestalten.

Die durch die Erfindung erreichten Vorteile sind im wesentlichen darin zu sehen, daß die Einlassdüse für das Fluid nicht in der Einspritzdüse für die plastische Kunststoffmasse angeordnet ist, sondern als Injektionshülse innerhalb des inneren Angußbereiches des Spritzlings angeordnet ist, von der Masse umflossen wird und bis in den Spritzling ins Formnest ragt, wobei der Fluidstrahl in die Richtung der Masse-Schubrichtung drückt. Eine Beschädigung der Wandungen des noch plastischen Spritzlings wird dadurch vermieden, die Gasrückgewinnung zusätzlich erleichtert und der Einsatz normaler, handelsüblicher Einspritzdüsen für die plastische Kunststoffmasse ermöglicht, ebenso wie der weiterer Vorrichtungsteile. Ein wichtiger Vorteil ist darin zu sehen, daß die Injektionshülse für das Fluid in dem Formstück verbleibt und somit auch eine Stützfunktion übernehmen kann sowie außerdem noch als konstruktives Element des fertigen Formstückes Funktionen übernehmen kann.

Die Erfindung ist nachstehend anhand eines Ausführungsbeispieles näher erläutert.

Es zeigt:
Fig.1 eine schematische Darstellung der Spritzform und
Fig.2 eine Ausführungsvariante der Fig.1

In den Abbildungen ist schematisch ein Spritzgießwerkzeug dargestellt, das im wesentlichen aus der eigentlichen Spritzform 1, der Spritzdüse 2 für das Einspritzen der plastischen Kunststoffmasse M durch den Angußkanal 3 in das Formnest 4 besteht.

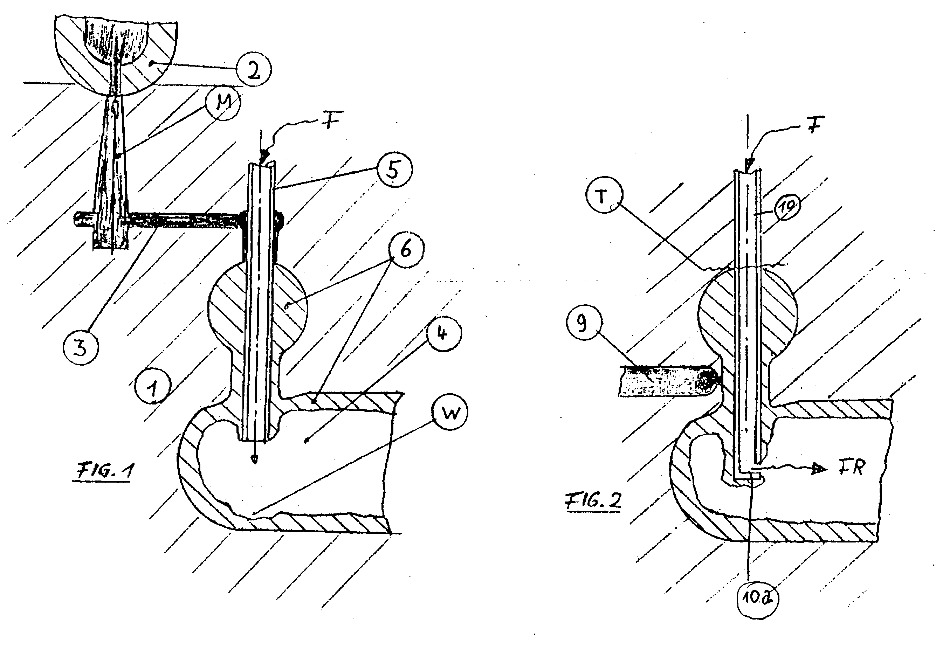

Die Figur 1 zeigt ein Spritzgießwerkzeug, bei dem die plastische Kunststoffmasse M durch den Angußkanal 3 fließt und dabei eine Injektionshülse 5 geringeren Durchmessers umfließt, um anschließend in das Formnest zu gelangen, wo sie sich an der Oberfläche der Wände verteilt, nachdem durch die Injektionshülse 5 ein Fluid in die sich im Formnest befindende plastische Kunststoffmasse M gepreßt wurde, ohne mit dieser vorher in Kontakt gekommen zu sein. Wird, wie in Fig.1 dargestellt, das Fluid direkt auf die dem Auslaß der Injektionshülse gegenüberliegende Wand des Spritzlings gerichtet, so kann u.a. eine Wanddickenschwächung W der noch plastischen Kunststoffmasse M eintreten.

Dies wird vermieden, wenn, wie in Fig.2 gezeigt, der Auslaß 10a der Injektionshülse 10 beispielsweise abgewinkelt und die Fluidrichtung mit der Masse- Schubrichtung in Übereinstimmung gebracht ist. Es können auch mehrere Auslaßöffnungen 10a, auch unterschiedlichen Durchmessers, in verschiedene Richtungen weisend, vorgesehen sein.

In Fig. 2 ist ferner dargestellt, daß der Angußkanal 9 des Spritzgießwerkzeuges 1 seitlich im Bereich des Spritzlings mündet. Eine solche Angußvariante ist für verschiedene herzustellende Formteile gegebenenfalls günstiger, als die in Fig.1 dargestellte Form des Angusses. Es sind auch weitere Varianten möglich.

Die Injektionshülse 5 und 10 für das einzuleitende Fluid kann entweder in dem fertigen Formteil verbleiben und auch als Stützglied oder als konstruktives Element, beispielsweise Verbindungselement zu einem weiteren Formteil oder dergl. dienen oder abgetrennt werden, wozu sie in der Ebene T gem. Fig.2 abgetrennt wird. Sie kann aber auch nach Beendigung des Spritzvorganges, während oder nach der Abkühlphase des Spritzlinges und auch vor oder nach dem Fluidrückfluß aus dem fertigen Formteil bzw. Angußbereich zum Zwecke der Entformung wieder herausgezogen werden.

Verbleibt die Injektionshülse in dem fertigen Formteil, so kann sie in verschiedenen Abschnittten unterschiedliche Profile aufweisen, gem. den Anforderungen des Einsatzes.

## Patentansprüche

1. Spritzgießverfahren zur Herstellung hohler Kunststoffgegenstände, bei dem ein Fluid (F) unter Druck unmittelbar nach dem Einspritzen der plastischen Kunststoffmasse (M), ohne mit dieser vorher in Berührung zu kommen so in das Formnest (4) eingepresst wird, daß sich die Kunststoffmasse (M) über die Oberfläche des Formnestes (4) ausbreitet wobei das Fluid (F) durch eine von der plastischen Kunststoffmasse (M) umströmte, über den inneren Angußbereich des Spritzlings (6) in das Formnest (4) ragende, nach dem Spritzgießprozeß aus dem Formnest (4) ziehbare Injektionshülse (5) in das Formnest (4) gepreßt wird, wobei die Injektionshülse (5) vor dem Einpressen der Kunststoffmasse (M) in einer vorbestimmten Lage im Formnest (4) angeordnet wird und wobei das Fluid (F) in einer vorgegebenen Richtung in das Formnest (4) strömt und dabei die plastische Kunststoffmasse (4) in ihrer Flußrichtung unterstützt und an die Oberfläche des Formnestes (4) preßt.

2. Spritzgießverfahren nach Anspruch 1, bei dem die Injektionshülse (5) nach Beendigung des Spritzvorganges, während oder nach der Abkühlungsphase des Spritzlings (6) und vor oder nach dem Fluidrückfluß aus demselben und/oder dem Angußbereich durch die Injektionshülse (5) wieder entfernt wird.

3. Spritzgießverfahren nach Anspruch 1 und 2, mit einer Injektionshülse (5), die im Spritzling (6) verbleibt und somit ein Bestandteil desselben wird.

4. Spritzgießvorrichtung mit einer Spritzform (1), einer Einspritzdüse (2) für die plastische Kunststoffmasse (M) sowie einer Einrichtung zum Einpressen eines Druckfluids (F) in das Formnest (4) zur Herstellung hohler Kunststoffgegenstände nach dem Verfahren gern. Anspruch 1 bis 3, **dadurch gekennzeichnet,** daß als Einrichtung zum Einpressen des Druckfluids eine von der Einspritzdüse (2) für die Kunststoffmasse (M) getrennten Injektionshülse (5) die im inneren Angußbereich des Spritzlings (6) in definierter Lage angeordnet und von der eingespritzten Kunststoffmasse (M) umströmt ist.

5. Spritzgießvorrichtung nach Anspruch 4, **dadurch gekennzeichnet,** daß die Ausströmöffnung (10a) der Injektionshülse (10) in die Masseschubrichtung weist.

6. Spritzgießvorrichtung nach Anspruch 4 und 5, **dadurch gekennzeichnet,** daß die Injektionshülse (5,10) abschnittsweise unterschiedliches Profil aufweist.

7. Spritzgießvorrichtung nach Anspruch 4 bis 6, **dadurch gekennzeichnet,** daß die Injektionshülse (5) ein Konstruktionselement des fertigen Formstückes ist.

8. Spritzgießvorrichtung nach Anspruch 4 bis 7, **dadurch gekennzeichnet,** daß die Injektionshülse (5) als Verbindungsstück dient.

9. Spritzgießvorrichtung nach Anspruch 4 bis 8, **dadurch gekennzeichnet,** daß die Injektionshülse (10) eine oder mehrere Auslaßöffnungen (10a) für das Fluid besitzt.

## Claims

1. Injection moulding process for producing hollow objects of plastic material, where immediately after the injection of the mass of plastic material (M) and without having come into contact with said mass of plastic material beforehand, a fluid (F) is pressed under pressure in such a way into the mould form (4) that the mass of plastic material (M) spreads over the surface of the mould form (4), said fluid F) being pressed into said mould form (4) by an injection sleeve (5) surrounded by the flowing mass of plastic material (M) and projecting into said mould form (4) beyond the internal sprue area of the moulding (6) and permitting to be pulled out of said mould form (4) after the injection moulding process, said injection sleeve (5) being arranged in a predetermined position in said mould form (4) after the mass of plastic material (M) has been pressed in, said fluid (F) flowing in a preset direction into said mould form (4), thereby assisting the mass of plastic material (M) in its direction of flow and pressing it against the surface of said mould form (4).

2. Injection moulding process according to claim 1, where said injection sleeve (5) is removed after conclusion of the injection process during or after the cooling-down phase of the injection moulding (6) and before or after the return flow of the fluid from said injection moulding (6) and/or the sprue area.

3. Injection moulding process according to claims 1 and 2, with an injection sleeve (5) which remains in said injection moulding (6) and thus becomes a component of said injection moulding (6).

4. Injection moulding equipment with an injection mould (1), an injection nozzle (2) for the mass of plastic material (M) and an equipment for pressing a compressed fluid (F) into the mould form (4) for producing hollow objects of plastic material according to the process of claims 1 to 3, **characterized in that**, as an equipment for pressing the compressed fluid in, an injection sleeve (5) separate from said injection nozzle (2) or the mass of plastic material (M) is arranged in a defined position and is surrounded by the flowing injected mass of plastic material (M).

5. Injection moulding equipment according to claims 4, **characterized in that** the outlet (10a) of said injection sleeve (10) has the direction in which the mass spreads.

6. Injection moulding equipment according to claims 4 and 5, **characterized in that** said injection sleeve (5, 10) has profiles which differ from one section to another.

7. Injection moulding equipment according to claims 4 to 6, **characterized in that** said injection sleeve (5) is a constructional element of the finished formed part.

8. Injection moulding equipment according to claims 4 to 7, **characterized in that** said injection sleeve (5) serves as a connecting element.

9. Injection moulding equipment according to claims 4 to 8, **characterized in that** said injection sleeve (10) has one or several outlets (10a) for said fluid.

## Revendications

1. Procédé de moulage à injection pour la fabrication d'objets creux en matière plastique suivant lequel un fluide (F) est injecté dans la cavité (4) directement après l'injection de la masse de matière plastique (M) se trouvant en état plastique sans entrer en contact avec celle-ci au préalable, de sorte que la masse de matière plastique (M) se répand par dessus la surface de la cavité (4), le fluide (F) étant injecté dans la cavité (4) à travers une douille d'injection (5) entourée de la masse de matière plastique se trouvant en état plastique, faisant salle dans la cavité (4) par dessus la zone intérieure du culot d'injection de la pièce moulée (6) et pouvant être retirée de la cavité (4) après le moulage à injection, la douille d'injection (5) étant placée dans la cavité (4) dans une position définie avant l'introduction sous pression de la masse de matière plastique (M) et le fluide (F) coulant dans la cavité (4) dans un sens prédéterminé tout en soutenant la masse de matière plastique (M) se trouvant en état plastique dans son sens d'écoulement et la pressant contre la surface de la cavité (4).

2. Procédé de moulage à injection selon la revendication 1, suivant lequel la douille d'injection (5) est retirée après achèvement de l'injection, durant ou après la phase de refroidissement de la pièce moulée (6) et avant ou après le reflux du fluide de celle-ci et/ou de la zone du culot d'injection à travers la douille d'injection (5).

3. Procédé de moulage à injection selon la revendication 1 et 2 avec une douille d'injection (5) qui reste dans la pièce moulée devenant ainsi une pièce constitutive de celle-ci.

4. Dispositif de moulage à injection avec un moule (1), une buse d'injection (2) pour la masse de matière plastique (M) se trouvant en état plastique et un équipement d'injection d'un fluide sous pression (F) dans la cavité (4) pour la fabrication d'objets creux en matière plastique suivant le procédé selon les revendications 1 à 3, **caractérisé en ce que** l'équipement d'injection du fluide sous pression est constitué par une douille d'injection (5) séparée de la buse d'injection (2) pour la matière plastique disposée dans la zone interne du culot d'injection de la pièce moulée (6) dans une position définie et entourée de la masse de matière plastique (M) injectée.

5. Dispositif de moulage à injection selon la revendication 4, **caractérisée en ce que** l'orifice d'écoulement (10a) de la douille d'injection (10) est orienté dans le sens dans lequel la masse se répand.

6. Dispositif de moulage à injection selon les revendications 4 et 5, **caractérisé en ce que** la douille d'injection (5, 10) présente par sections des profils différents.

7. Dispositif de moulage à injection selon les revendications 4 à 6, **caractérisé en ce que** la douille d'injection (5) est un élément de construction de la pièce moulée finie.

8. Dispositif de moulage à injection selon les revendications 4 à 7, **caractérisé en ce que** la douille d'injection (5) sert de pièce de liaison.

9. Dispositif de moulage à injection selon les revendications 4 à 8, **caractérisé en ce que** la douille d'injection (10) est pourvue d'un ou de plusieurs orifices d'écoulement (10a) pour le fluide.
